# EUROPEAN PATENT APPLICATION

(11) **EP 4 703 212 A2**
(43) Date of publication of application: **04.03.2026**
(21) Application number: 25197106.5
(22) Date of filing: 20.08.2025
(51) Int. Cl.: B60R 16/02, H02G 3/30

(54) **CARPET MODULE WITH INTEGRATED CONDUCTORS**

(30) Priority: 28.08.2024 US 202463687867 P; 16.10.2024 US 202418917489
(71) Applicant: Aptiv Technologies AG, 8200 Schaffhausen (CH)
(72) Inventor: CHERNUSHIN, Shawn, 8200 Schaffhausen (CH); SUDIK JR., Joseph, 8200 Schaffhausen (CH); PETERSON, David R., 8200 Schaffhausen (CH); SIEGFRIED, David, 8200 Schaffhausen (CH)
(74) Representative: Bardehle Pagenberg Partnerschaft mbB Patentanwälte Rechtsanwälte

(57) **Abstract**

A wiring assembly is configured to be coupled to a substrate. The wiring assembly includes a wire, a first connector, a wire clip, a connector clip, and a second connector. The wire is configured to be disposed within a channel of the substrate. The first connector is coupled to the wire. The wire clip is coupled to the wire and is configured to be disposed within the channel. The connector clip is coupled to the first connector and is configured to be coupled to an end of the substrate. The second connector is configured to be coupled to the substrate and includes a first cover and a second cover coupled to the first cover. The first and second covers define a cavity configured to receive the wire.

## Description

### Cross-Reference to Related Applications

This application claims the benefit of U.S. Provisional Application No, 63/687,867 filed August 28, 2024, the entire disclosure of which is incorporated by reference.

### Field

The present disclosure relates to a module including integrated conductors, and more particularly to a carpet module with integrated flat flexible cables, flexible plastic film, or flat cables.

### Background

Modem vehicles (e.g., automobiles) rely on electrical wiring and electrical connections to facilitate the transmission of electricity within, and between various components of, the vehicle. Wires may be cut to a predetermined length, terminated, bundled, routed, and secured in place under, over, between, through, etc. conduit, carpet, upholstery, sheet metal, and/or other structural components of the vehicle. For example, adhesive (e.g., cloth or vinyl tape) and/or clips may be used to secure a bundled wiring assembly (e.g., a wire harness) in place relative to the carpet or other fabric in a vehicle. The wiring assembly may be fixed and/or attached to a vehicle floor pan and/or adjacent metal vehicle structure as a self-contained assembly separate from a carpet assembly that is layered on top of the wiring assembly. Automotive-type carpets and/or carpet assemblies can be made as a single piece or multiple pieces to correctly fit a specific vehicle type. Each carpet piece can be made of a single layer or multiple layers of material. For example, carpet and/or carpet assemblies may include (i) a patterned or shaped material layer (e.g., an upper layer) that is woven and/or stitched, (ii) a rubberized and/or plastic layer and/or patch (e.g., an upper and/or intermediate layer) for, e.g., wear resistance, (iii) a patterned or shaped pressed fabric layer (e.g., an intermediate layer) for, e.g., sound padding, and/or (iv) a closed and/or open foam layer (e.g., an intermediate layer) for structural support. Layers may be secured together using adhesives. Sections of secured layer(s) may (a) have through hole cutouts to provide access to a floor pan (e.g., sheet metal) of the vehicle, (b) be contoured to fit a specific floor pan shape, and/or (c) secured to the floor pan using fasteners.

While known wiring and carpet assemblies and methods for vehicle wiring systems have proven acceptable for their intended purpose, a continuous need for improvement remains in the pertinent art to address the challenges associated with accurate and efficient assembly of wiring systems.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### Summary

One aspect of the disclosure provides a wire clip. The wire clip includes a cover configured to be coupled to a base. The cover includes beveled terminal ends configured to secure the cover to a substrate.

Another aspect of the disclosure provides a connector clip. The connector clip includes a base, a first substrate-retaining arm, a second substrate-retaining arm, and a connector-retaining arm. The first substrate-retaining arm extends from the base in a first direction. The second substrate-retaining arm extends from the base in the first direction. The first substrate-retaining arm and the second substrate-retaining arm define an opening configured to receive a substrate. The connector-retaining arm extends from the base in a second direction opposite the first direction and is configured to engage a connector.

Yet another aspect of the disclosure provides a connector. The connector includes a first cover, a second cover, and a seal. The second cover is coupled to the first cover. The first and second covers define a cavity. The seal is disposed within the cavity and includes a first side and a second side opposite the first side. The first side engages the first cover and the second side engages the second cover.

Another aspect of the disclosure provides a wiring assembly. The wiring assembly is configured to be coupled to a substrate. The wiring assembly includes a wire, a first connector, a wire clip, a connector clip, and a second connector. The wire is configured to be disposed within a channel of the substrate. The first connector is coupled to the wire. The wire clip is coupled to the wire and is configured to be disposed within the channel. The connector clip is coupled to the first connector and is configured to be coupled to an end of the substrate. The second connector is configured to be coupled to the substrate and includes a first cover and a second cover coupled to the first cover. The first and second covers define a cavity configured to receive the wire.

Further areas of applicability of the present disclosure will become apparent from the detailed description, the claims, and the drawings. The detailed description and specific examples are intended for purposes of illustration only and are not intended to limit the scope of the disclosure.

### Brief Description Of The Drawings

The present disclosure will become more fully understood from the detailed description and the accompanying drawings.
FIG. 1 is a perspective view of a vehicle including an integrated wiring assembly according to the principles of the present disclosure.
FIG. 2 is a perspective view of an integrated wiring assembly according to the principles of the present disclosure.
FIG. 3 is a perspective view of a portion of the integrated wiring assembly of FIG. 2.
FIG. 4 is a perspective view of a portion of an integrated wiring assembly according to the principles of the present disclosure.
FIG. 5 is another perspective view of a portion of the integrated wiring assembly of FIG. 2.
FIG. 6 is a perspective view of a partially-exploded portion of the integrated wiring assembly of FIG. 2.
FIG. 7 is a perspective view of a partially-assembled portion of the integrated wiring assembly of FIG. 2.
FIG. 8 is a front view of a wire clip of an integrated wiring assembly according to the principles of the present disclosure.
FIG. 9 is another perspective view of a portion of the integrated wiring assembly of FIG. 2.
FIG. 10 is a perspective view of a connector clip of an integrated wiring assembly according to the principles of the present disclosure.
FIGS. 11 and 12 are perspective views of an additional partially-exploded portion of the integrated wiring assembly of FIG. 2.
FIG. 13 is a side view of a partially-assembled portion of the integrated wiring assembly of FIG. 2.
FIG. 14 is a perspective view of a cover of a connector of an integrated wiring assembly according to the principles of the present disclosure.

In the drawings, reference numbers may be reused to identify similar and/or identical elements.

### Detailed Description

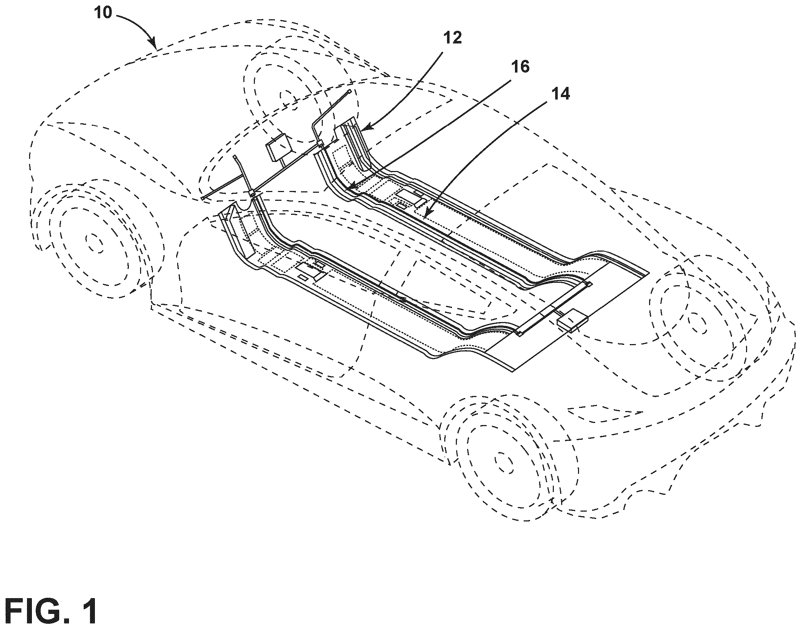

With reference to FIG. 1, a vehicle 10 including an integrated wiring assembly 12 is illustrated. The integrated wiring assembly 12 may include a substrate 14 and a wiring subassembly 16, among others. The integrated wiring assembly 12 may be installed in the vehicle 10 as a single unit. The integrated wiring assembly 12 facilitates an automated, modular assembly process that saves installation time and mass and reduces installation errors, routing errors, and/or variability.

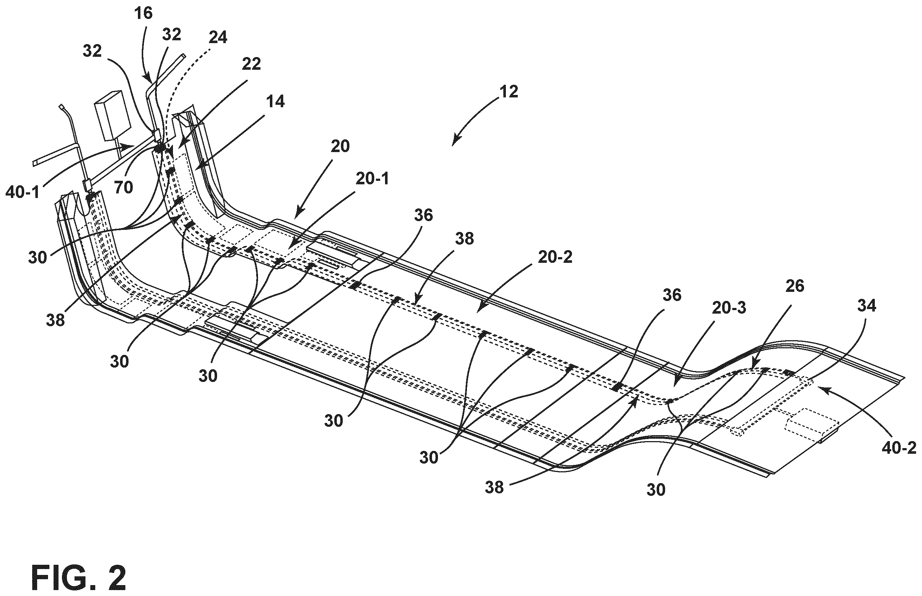

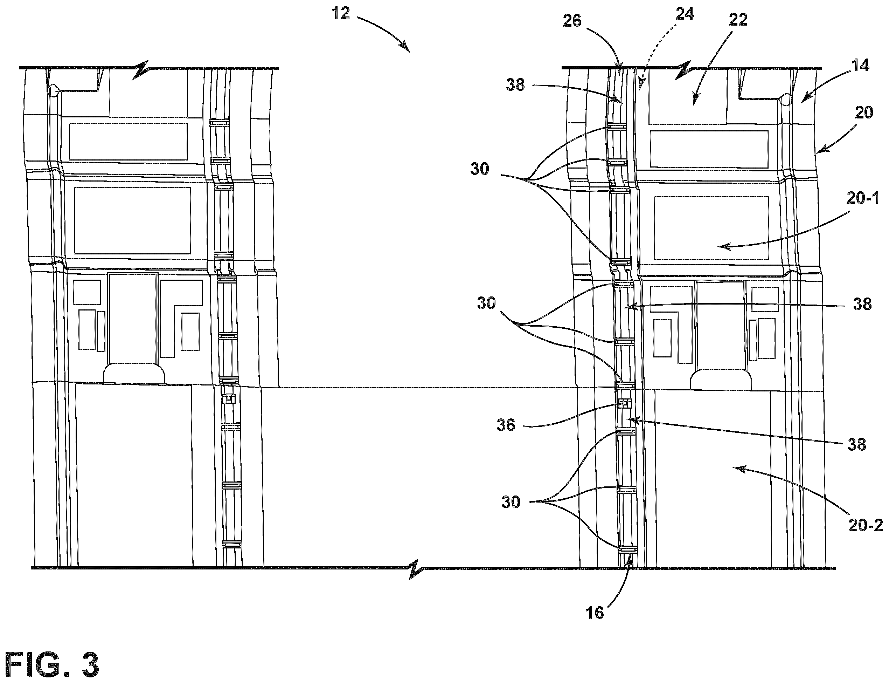

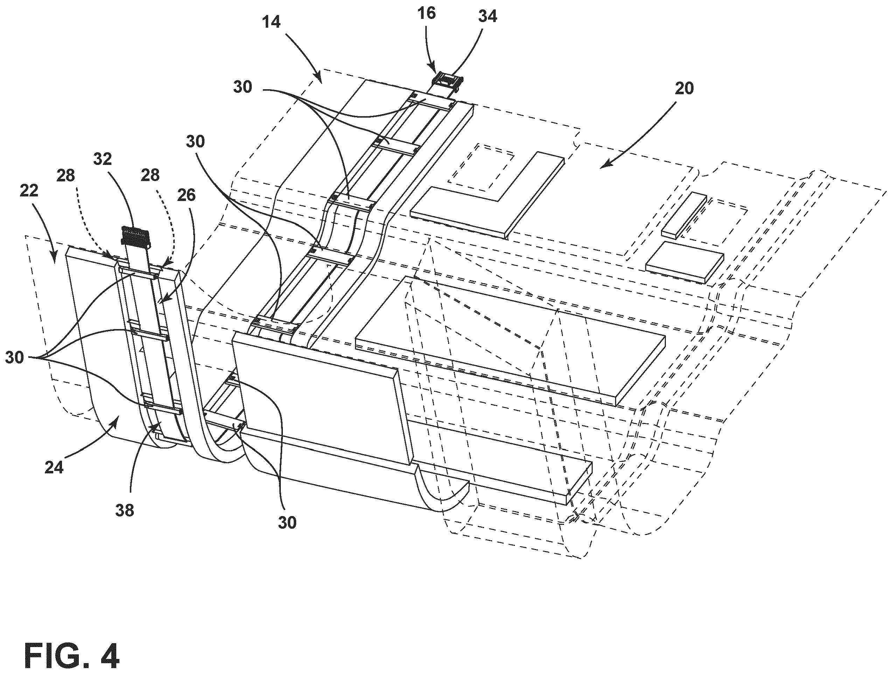

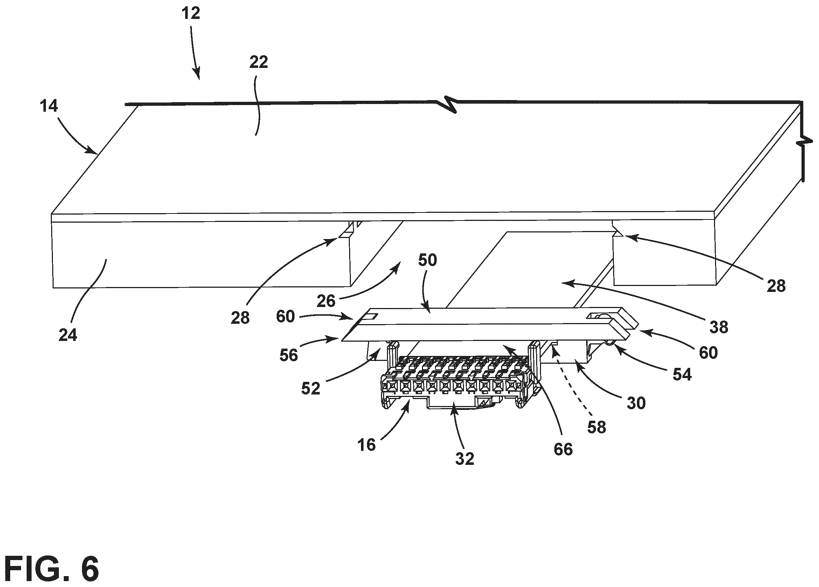

With reference to FIGS. 2-4, the substrate 14 may include a set of modules 20 (e.g., a first module 20-1, a second module 20-1, and a third module 30-1, etc.). The set of modules 20 may be connected to form the substrate 14. In various implementations, each module 20 includes a first layer 22 (e.g., carpet) and a second layer 24 (e.g., sound-reducing pad, foam, etc.) coupled to the first layer 22. The first layer 22 may be an upper layer and the second layer 24 may be a lower layer. The second layer 24 may define one or more channels 26 and include one or more slots 28. The one or more slots 28 may face the channel 26 (see, e.g., FIG. 6). While the substrate 14 is generally depicted as including three modules 20, the substrate 14 may include more or less than three modules 20.

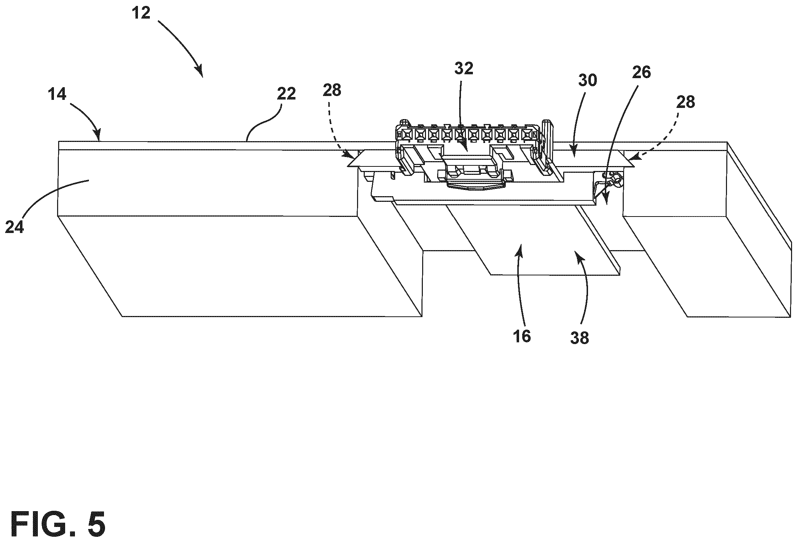

With continued reference to FIGS. 2-4, the wiring subassembly 16 may include a plurality of wire clips 30, a first connector 32, a second connector 34, one or more third connectors 36, and a set of integrated conductors 38 (e.g., integrated flat flexible cables, flexible plastic film, wires, and/or flat cables), among others. In an assembled configuration, the wiring subassembly 16 may be disposed within the channel 26 of the substrate 14. The wire clips 30 may be coupled to the conductors 38 and the substrate 14. For example, each wire clip 30 may be disposed within one or more of the slots 28 (see, e.g., FIG. 5).

In various implementations, the first and second connectors 32, 34 are connected to terminal ends of the conductors 38. For example, the first connector 32 is connected to a first terminal end 40-1 of the conductors 38 and the second connector 34 is connected to a second terminal end 40-2 of the conductors 38 opposite the first terminal end 40-1. In various implementations, the wiring subassembly 16 facilitates the transmission of electricity between various electronic components within the vehicle 10. For example, the first and second connectors 32, 34 may be female connectors that detachably couple to mating connectors (e.g., male connectors, not shown) such that, during operation, of the vehicle 10, electricity is transmitted through the wiring subassembly 16 to various electronic components within the vehicle 10.

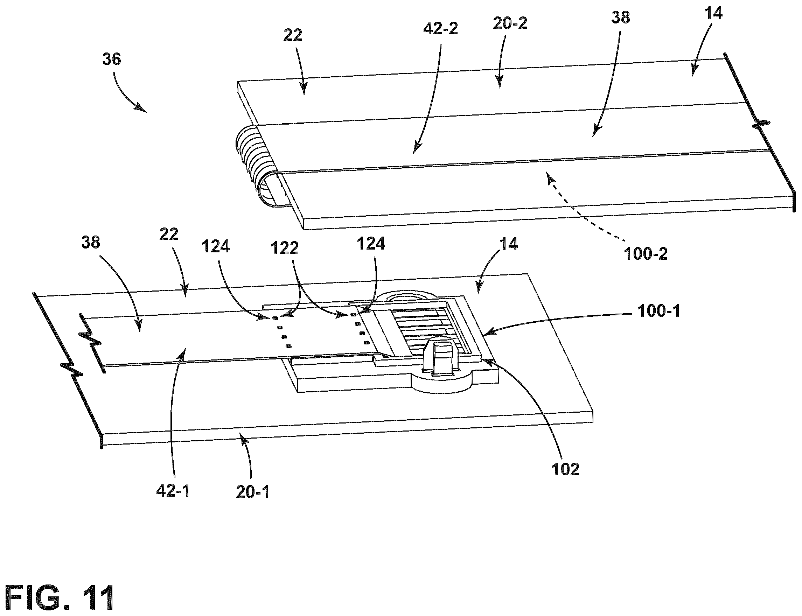

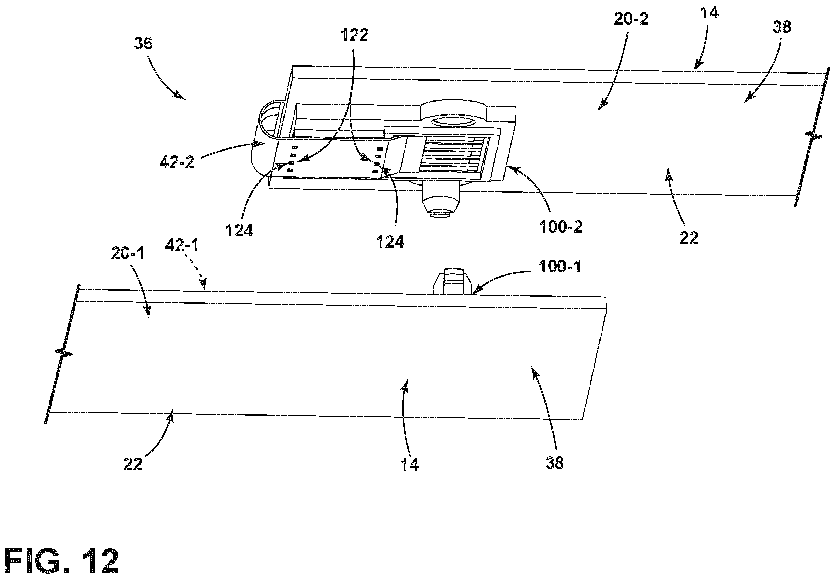

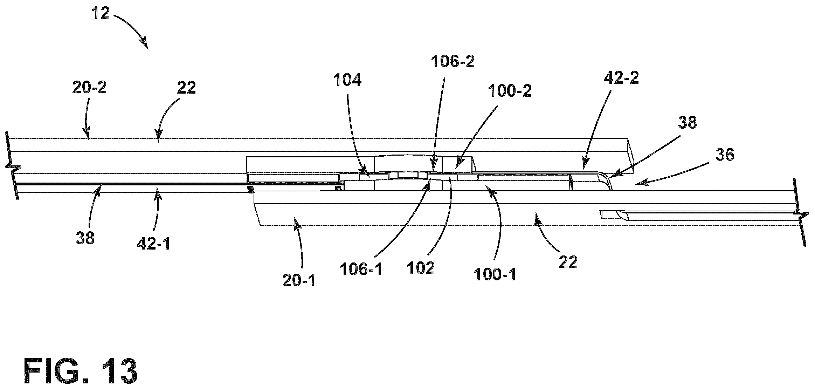

In various implementations, a third connector 36 is coupled to the conductors 38 between the first and second connectors 32, 34. In some example configurations, each module of the set of modules 20 includes a subset 42 of the set of conductors 38. A third connector 36 may be used to electrically connect the conductors of adjacent modules 20. For example, a third connector 36 may electrically connect a first subset of conductors 42-1 of a first module 20-1 to a second subset of conductors 42-2 of a second module 20-2 (see, e.g., FIGS. 11-13). A third connector 36 may increase the length of the set of conductors 38 by connecting the conductors of adjacent modules 20.

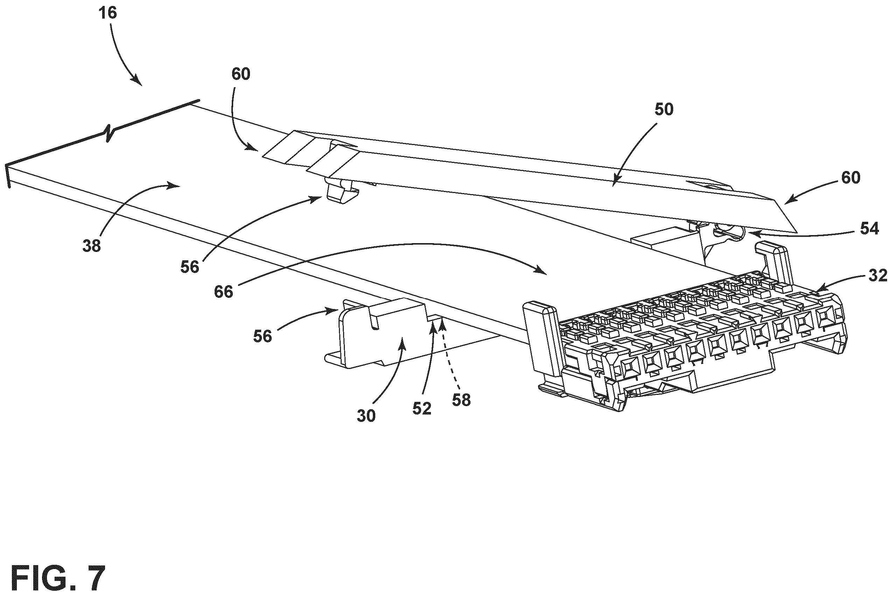

With reference to FIGS. 6-8, a wire clip 30 may comprise one or more of a variety of shapes, sizes, configurations, and/or materials. In various implementations, a wire clip 30 may include a cover 50 rotatably coupled to a base 52. For example, the cover 50 may be rotatably coupled to the base 52 by a ratchet closure hinge 54. The cover 50 and the base 52 may each include a lock mechanism 56 (e.g., a recess and/or a lock protrusion) and/or an adhesive 58 (e.g., tape pad). The lock mechanism 56 of one of the cover 50 or the base 52 may mate with the lock mechanism 56 of the other of the cover 50 or the base 52 to prevent the cover 50 from rotating relative to the base 52 and/or to releasably secure the cover 50 to the base 52.

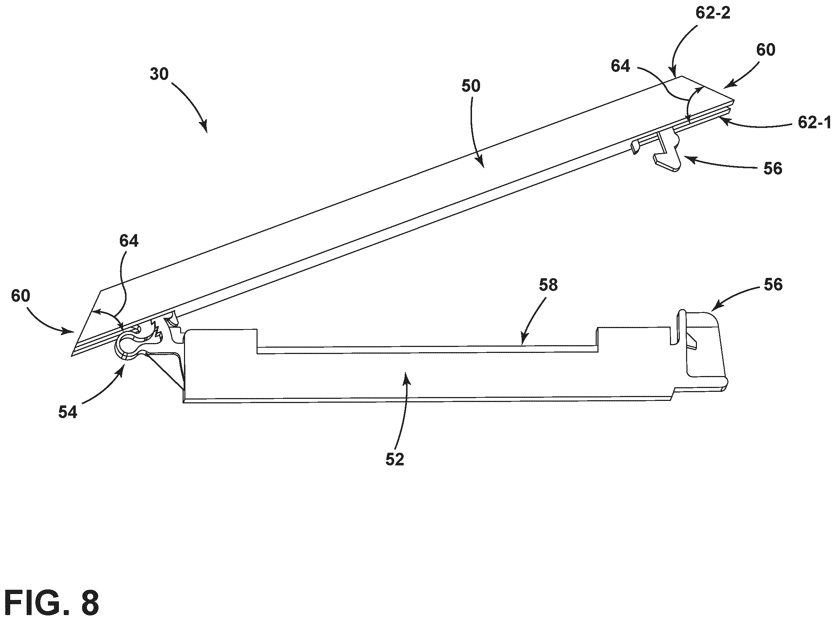

In various implementations, the cover 50 includes beveled terminal ends 60 that secure the cover 50 to the substrate 14 (e.g., the second layer 24). With reference to FIG. 8, the cover 50 includes a first side 62-1 and a second side 62-2 opposite the first side 62-1. The terminal ends 60 extend between the first and second sides 62-1, 62-2. Each terminal end 60 defines an acute angle 64 relative to the first side 62-1.

In various implementations, in an assembled configuration, the cover 50 and the base 52 define an aperture 66 that receives a portion (e.g., the conductors 38) of the wiring subassembly 16. In various implementations, at least one of the cover 50 or the base 52 includes the adhesive 58 in the aperture 66 to secure the wiring subassembly 16 within the aperture 66.

In various implementations, the wiring subassembly 16 can be integrated into the substrate 14 by forming the one or more channels 26 in, e.g., the second layer 24 and placing the wiring subassembly 16 within one of the channels 26 to inhibit misalignment, loosening, and/or dislodgement of the wiring subassembly 16 relative to the substrate 14.

This integration technique may allow simplified or more direct routing paths for conductors 38, and reduce or eliminate separate electrical conductor conduits, channels, and/or taping so as to provide component and/or content savings.

Additionally, single use and/or disposable holders can be used (e.g., fixed to the first layer and/or the second layer of the substrate) to pre-position and/or stage conductor branches and/or connections that are routed and/or connected subsequent to the installation of the integrated wiring assembly 12.

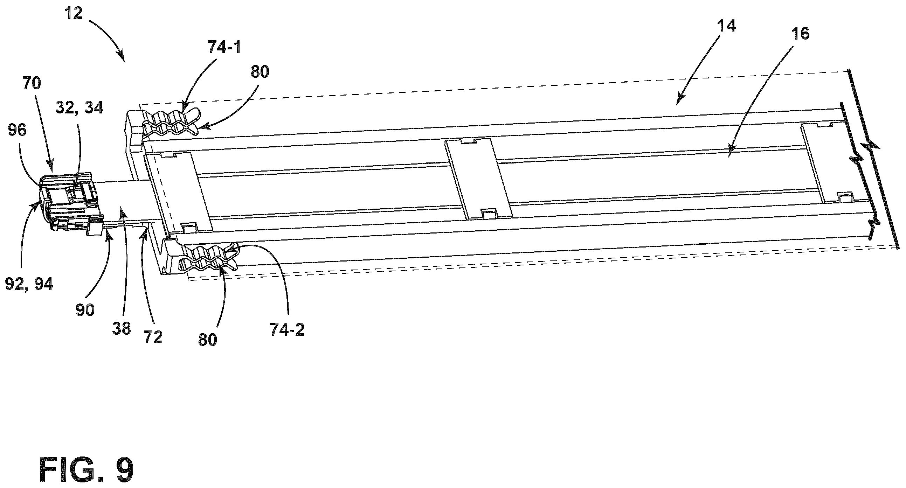

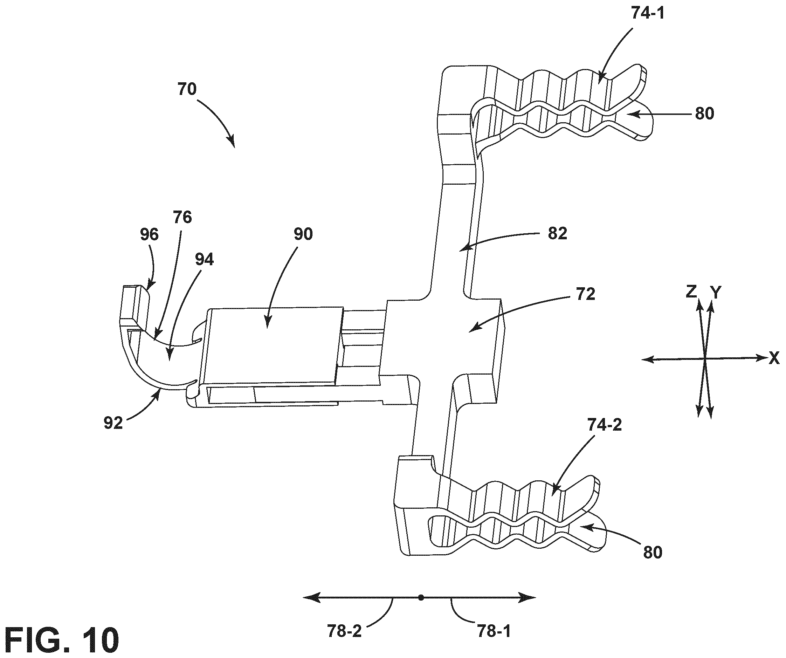

With reference to FIGS. 9 and 10, the wiring subassembly 16 includes at least one connector clip 70. In various implementations, a connector clip 70 secures the first connector 32 or the second connector 34 to the substrate 14 during the installation of the wiring assembly 12 into the vehicle 10. A connector clip 70 prevents the first connector 32 or the second connector 34 and a portion (e.g., conductors 38) of the wiring subassembly 16 from getting trapped underneath the substrate 14 during the installation of the wiring assembly 12 into the vehicle 10.

In various implementations, a connector clip 70 comprises one or more of a variety of shapes, sizes, configurations, and/or materials. A connector clip 70 may include a base 72, a first substrate-retaining arm 74-1, a second substrate-retaining arm 74-2, and a connector-retaining arm 76, among others. The first and second substrate-retaining arms 74-1, 74-2 may extend from the base 72 in a first direction 78-1. The connector-retaining arm 76 may extend from the base 72 in a second direction 78-2 opposite the first direction 78-1.

In various implementations, the first and second substrate-retaining arms 74-1, 74-2 may each define an opening 80 that receives the substrate 14. The base 72 and the first and second substrate-retaining arms 74-1, 74-2 may define a channel 82 that receives a portion (e.g., conductors 38) of the wiring subassembly 16. In some example configurations, the first and second substrate-retaining arms 74-1, 74-2 define wave-shaped configurations.

In various implementations, the connector-retaining arm 76 engages the first connector 32 or the second connector 34. In some example configurations, the connector-retaining arm 76ncludes a first portion 90 slidably-coupled to the base 72 and a second portion 92 coupled to the first portion 90. The first portion 90 may move relative to the base 72 (e.g., in the X-direction) such that the connector clip 70 can connect to various sized connectors.

In various implementations, the second portion 92 engages the first connector 32 or the second connector 34. The second portion 92 may include a radiused portion 94 connected to the first portion 90 and a tab 96. The tab 96 may extend from the radiused portion 94 in the first direction 78-1.

With reference to FIGS. 11-14, a third connector 36 may comprise one or more of a variety of shapes, sizes, configurations, and/or materials. A third connector 36 may include a first cover 100-1, a second cover 100-2, and one or more seals 102, among others. In an assembled configuration, the second cover 100-2 may be releasably-coupled to the first cover 100-1. The first and second covers 100-1, 100-2 define a cavity 104. The seal 102 may be disposed in the cavity 104. The seal 102 may include a first side 106-1 and a second side 106-2 opposite the first side 106-1. The first side 106-1 may engage the first cover 100-1 and the second side 106-2 may engage the second cover 100-2. The seal 102 inhibits contaminants from entering the cavity 104.

In some example configurations, the first cover 100-1 connects with a first module 20-1 and the second cover 100-2 connects with a second module 20-1. For example, the first cover 100-1 may be secured to a first layer 22 of the first module 20-1 and the second cover 100-2 may be secured to a first layer 22 of the second module 20-2 via adhesives.

In various implementations, the first cover 100-1 connects with a first subset of conductors 42-1 and the second cover 100-2 connects with a second subset of conductors 42-2. In the assembled configuration, the first cover 100-1 may be connected with the second cover 100-2 such that the first and second subsets 42-1, 42-2 are electrically connected.

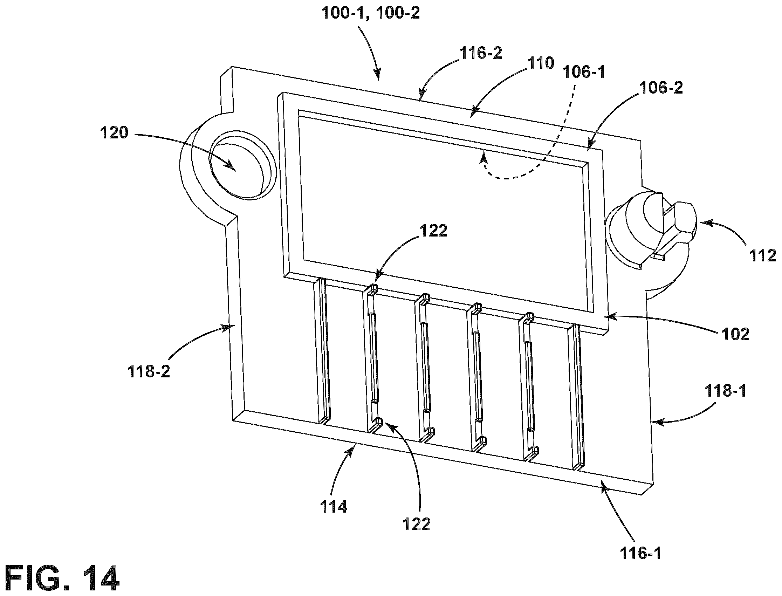

In various implementations, the first and second covers 100-1, 100-2 include identical configurations. With reference to FIG. 14, the first and second covers 100-1, 100-2 may each include a base 110, a locking arm 112, and a plurality of elongated projections 114, among others. The base 110 may include a first end 116-1 and a second end 116-2 opposite the first end 116-1. The base 110 may include a first side 118-1 extending between the first and second ends 116-1, 116-2 and a second side 118-2 opposite the first side 118-1.

In various implementations, the locking arm 112 is disposed proximate the first side 118-1. The base 110 may define a void 120 proximate the second side 118-2. In some example configurations, the locking arm 112 of the first cover 100-1 is received by the void 120 of the second cover 100-2 and the locking arm 112 of the second cover 100-2 is received by the void 120 of the first cover 100-1 to secure the second cover 100-2 to the first cover 100-1.

In various implementations, each projection 114 extends from the first end 116-1 and terminates before the second end 116-2. Each projection 114 may include one or more protrusions 122. In the assembled configuration, a protrusion 122 is disposed in a slot 124 of a subset 42 of conductors 38.

Referring again to FIG. 2, in an assembled configuration, the wiring subassembly 16 is coupled to the substrate 14. In various implementations, a wire (e.g., a conductor 38) is disposed within a channel 26 of the substrate 14. A first connector 32 is coupled to the wire. A wire clip 30 is coupled to the wire and is disposed within the channel 26. The wire clip 30 is removably-coupled to the substrate 14.

In various implementations, a connector clip 70 is coupled to the first connector 32 and is coupled to an end of the substrate 14. An additional connector 36 is coupled to the substrate 14 and includes a first cover 100-1 and a second cover 100-2 coupled to the first cover 100-1. The first and second covers 100-1, 100-2 define a cavity 104 that receives the wire.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "proximate," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a carpet module with integrated conductors, as described above.

Clause 1: A wire clip comprising a cover configured to be coupled to a base, the cover including beveled terminal ends configured to secure the cover to a substrate.

Clause 2: The wire clip of clause 1, further comprising a base coupled to the cover, the base and the cover defining an aperture configured to receive a portion of a wiring assembly.

Clause 3: The wire clip of clause 2, wherein the cover is configured to rotate relative to the base.

Clause 4: The wire clip of clause 2, wherein at least one of the base or the cover includes an adhesive disposed in the aperture and operable to secure a wiring assembly within the aperture.

Clause 5: The wire clip of any of clauses 1 through 4, wherein: the cover includes a first side and a second side opposite the first side; the terminal ends extend between the first and second sides; and each terminal end defines an acute angle relative to the first side.

Clause 6: The wire clip of any of clauses 1 through 5, wherein the cover includes a lock that is received by the base to releasably secure the cover to the base.

Clause 7: A connector clip comprising: a base; a first substrate-retaining arm extending from the base in a first direction; a second substrate-retaining arm extending from the base in the first direction, the first substrate-retaining arm and the second substrate-retaining arm defining an opening configured to receive a substrate; and a connector-retaining arm extending from the base in a second direction opposite the first direction and configured to engage a connector.

Clause 8: The connector clip of clause 7, wherein the base and the first and second substrate-retaining arms define a channel configured to receive a portion of a wiring assembly.

Clause 9: The connector clip of clause 7 or 8, wherein the first and second substrate-retaining arms define wave-shaped configurations.

Clause 10: The connector clip of any of clauses 7 through 9, wherein: the connector-retaining arm includes a first portion slidably-coupled to the base and a second portion coupled to the first portion; and the second portion is configured to engage the connector.

Clause 11: The connector clip of clause 10, wherein the second portion of the connector-retaining arm includes: a radiused portion connected to the first portion; and a tab extending from the radiused portion in the first direction.

Clause 12: A connector comprising: a first cover; a second cover coupled to the first cover, the first and second covers defining a cavity; and a seal disposed within the cavity and including a first side and a second side opposite the first side, the first side engaging the first cover, and the second side engaging the second cover.

Clause 13: The connector of clause 12, wherein the first and second covers include identical configurations.

Clause 14: The connector of clause 12 or 13, wherein: the first cover is configured for connection with a first wiring assembly; the second cover is configured for connection with a second wiring assembly; and in an assembled configuration, the first and second covers are connected such that the first and second wiring assemblies are electrically connected.

Clause 15: The connector of clause 14, wherein: the first cover includes: an elongated projection that extends from a first end of the first cover and terminates before a second end of the first cover; and a protrusion that extends from the projection; and in the assembled configuration, the protrusion is disposed in a slot of the first wiring assembly.

Clause 16: The connector of any of clauses 12 through 15, wherein: the first cover includes: a base including a first side and a second side opposite the first side; and a locking arm extending from the base and disposed proximate the first side; and the base defines a void disposed proximate the second side.

Clause 17: A wiring assembly configured to be coupled to a substrate, the wiring assembly comprising: a wire configured to be disposed within a channel of the substrate; a first connector coupled to the wire; a wire clip coupled to the wire and configured to be disposed within the channel; a connector clip coupled to the first connector and configured to be coupled to an end of the substrate; and a second connector configured to be coupled to the substrate and including: a first cover; and a second cover coupled to the first cover, the first and second covers defining a cavity configured to receive the wire.

Clause 18: The wiring assembly of clause 17, wherein the wire clip is removably-coupled to the substrate.

Clause 19: The wiring assembly of clause 17 or 18, wherein: the wire clip includes a first portion having beveled terminal ends; and the terminal ends are received by slots in the substrate.

Clause 20: An assembly comprising: a substrate including a first end, a second end, and a channel formed in the first end; and the wiring assembly of any of clauses 17 through 19, wherein the wire is disposed within the channel.

## Claims

1. A wire clip comprising a cover configured to be coupled to a base, the cover including beveled terminal ends configured to secure the cover to a substrate.

2. The wire clip of claim 1 further comprising a base coupled to the cover, the base and the cover defining an aperture configured to receive a portion of a wiring assembly.

3. The wire clip of one of the claims 1 or 2 wherein the cover is configured to rotate relative to the base.

4. The wire clip of claim 2 wherein at least one of the base or the cover includes an adhesive disposed in the aperture and operable to secure a wiring assembly within the aperture.

5. The wire clip of one of the claims 1 to 4 wherein:
the cover includes a first side and a second side opposite the first side;
the terminal ends extend between the first and second sides; and
each terminal end defines an acute angle relative to the first side.

6. The wire clip of one of the claims 1 to 5 wherein the cover includes a lock that is received by the base to releasably secure the cover to the base.

7. A connector clip comprising:
a base;
a first substrate-retaining arm extending from the base in a first direction;
a second substrate-retaining arm extending from the base in the first direction, the first substrate-retaining arm and the second substrate-retaining arm defining an opening configured to receive a substrate; and
a connector-retaining arm extending from the base in a second direction opposite the first direction and configured to engage a connector.

8. The connector clip of claim 7 wherein the base and the first and second substrate-retaining arms define a channel configured to receive a portion of a wiring assembly.

9. The connector clip of one of the claims 7 or 8 wherein the first and second substrate-retaining arms define wave-shaped configurations.

10. The connector clip of one of the claims 7 to 9 wherein:
the connector-retaining arm includes a first portion slidably-coupled to the base and a second portion coupled to the first portion; and
the second portion is configured to engage the connector.

11. A connector comprising:
a first cover;
a second cover coupled to the first cover, the first and second covers defining a cavity; and
a seal disposed within the cavity and including a first side and a second side opposite the first side, the first side engaging the first cover, and the second side engaging the second cover.

12. The connector of claim 11 wherein the first and second covers include identical configurations.

13. The connector of one of the claims 11 or 12 wherein:
the first cover is configured for connection with a first wiring assembly;
the second cover is configured for connection with a second wiring assembly; and
in an assembled configuration, the first and second covers are connected such that the first and second wiring assemblies are electrically connected.

14. A wiring assembly configured to be coupled to a substrate, the wiring assembly comprising:
a wire configured to be disposed within a channel of the substrate;
a first connector coupled to the wire;
a wire clip coupled to the wire and configured to be disposed within the channel;
a connector clip coupled to the first connector and configured to be coupled to an end of the substrate; and
a second connector configured to be coupled to the substrate and including:
a first cover; and
a second cover coupled to the first cover, the first and second covers defining a cavity configured to receive the wire.

15. An assembly comprising:
a substrate including a first end, a second end, and a channel formed in the first end; and
the wiring assembly of claim 14, wherein the wire is disposed within the channel.
